# EUROPEAN PATENT APPLICATION

(11) **EP 3 805 547 A1**
(43) Date of publication of application: **14.04.2021**
(21) Application number: 19201987.5
(22) Date of filing: 08.10.2019
(51) Int. Cl.: F02M 55/04, F02M 55/00, F02M 55/02, B29C 64/00, F02M 63/02

(54) **FUEL INJECTION ASSEMBLY AND METHOD OF MANUFACTURING A FUEL RAIL ASSEMBLY**

(71) Applicant: Vitesco Technologies GmbH, 30165 Hannover (DE)
(72) Inventor: Serra, Giandomenico, 81737 München (DE); Pasquali, Marco, 81737 München (DE); Giorgetti, Edoardo, 81737 München (DE)

(57) **Abstract**

A fuel injection assembly for a multi-cylinder internal combustion engine comprises an elongate fuel rail (2) having an interior volume defining a fuel reservoir (20), and having a fuel inlet port (4) and a plurality of fuel outlets (16) spaced along the fuel rail. At least one of the fuel rail (2) and/or the fuel outlets (16) has in the fuel flow passage therethrough a membrane (26) forming a barrier to fuel flow which has at least one orifice (28) therein.

## Description

The present disclosure relates to a fuel injection assembly for an internal combustion engine, particularly but not exclusively to a multi-cylinder gasoline direct injection engine that has a fuel injector for each cylinder in which fuel is supplied to the injectors from a reservoir in the form of a fuel rail.

A fuel rail assembly commonly comprises an elongate fuel rail having an interior volume forming a fuel reservoir or main gallery, a plurality of fuel injector cups spaced along the fuel rail and being in communication with the reservoir. Each injector cup is adapted to receive an inlet of an associated fuel injector for each cylinder of the internal combustion engine for which the fuel rail assembly is intended. The fuel rail may have an inlet into the interior volume at one end that is hydraulically connected to a source of high pressure fuel, typically a high-pressure pump, and a sensor port to which a sensor is secured to measure the fluid pressure in the fuel rail. The end of the fuel rail tubular body opposite the inlet is closed in a fluid tight manner by a plug.

The fuel rail is typically a substantial steel tubular element which is strong enough to cope with the stresses of the load applied to the fuel rail by the high pressure of fuel in the reservoir. Due to the movement of the fuel into, through and out of the fuel rail into the fuel injectors, the flow of the fuel and inevitable oscillations caused by the pumping of the fuel into the reservoir frequently results in pressure oscillations in the fuel pressure in the fuel rail. This can create uncontrolled variations the fuel pressure supplied to the individual fuel injectors as a result of the pressure fluctuations in the region of the fuel outlet to the injectors. Pressure fluctuations can have adverse effects on the performance of the injectors which can lead to inefficient running of the engine with reduced power output and increased emissions.

In the past, these problems have been addressed by having a relatively large volume of fuel in the fuel rail. This results in the fuel rail being heavier and more expensive than is desired. It is also inevitably larger which may create difficulties in installation in the cramped space in the engine bay of a modern vehicle.

The present disclosure seeks to provide an improved fuel rail assembly and to a method of manufacturing the fuel rail.

According to the present disclosure there is provided a fuel injection assembly for a multi-cylinder internal combustion engine, the assembly comprising an elongate fuel rail having an interior volume defining a fuel reservoir, and having a fuel inlet port and a plurality of fuel outlets spaced along the fuel rail, wherein at least one of the fuel rail and/or the fuel outlets has in the fuel flow passage therethrough a membrane which assists in modifying the pressure and flow of fuel.

In an embodiment, the membrane comprises a barrier to fuel flow and has at least one orifice therein. The orifice provides a through hole and forms part of the fuel flow passage from the fuel inlet port to the fuel injector. The membrane locally constricts or reduces the cross-sectional area of the fuel flow passage.

The membrane with its one or more orifices is provided in order to reduce pressure peaks, leading to a better functionality of the injector and a lower fuel rail mechanical stress due to pressure pulsations. A pressure peak reduction allows the Main Gallery dimensions and weight to be reduced. The overall dimensions and the weight of the fuel rail can be reduced decreasing the fuel rail manufacturing cost.

The membrane may be provided as a separate part from the fuel rail and the fuel outlet and joined to the internal surface of the fuel rail or fuel outlet, for example by welding or brazing it to the internal surface such that the membrane divides the volume into a region upstream of the orifice(s) in the membrane and a region downstream of the orifice(s) in the membrane. The membrane may also be formed integrally with the fuel rail and/or outlet, for example by using additive manufacturing.

In a further embodiment, the membrane may have a smaller cross-sectional area than the fuel passage in the adjacent portion fuel rail or fuel outlet upstream and downstream of the membrane.

In some embodiments, the membrane includes a plurality of orifices.

The orifice(s) together with the barrier formed by the matrix of the membrane that extends between the orifices and between the orifice(s) and the fuel rail and or fuel outlet in which the membrane is positioned serve to control the flow and pressure of fluid through the membrane and, therefore, the flow, the pressure and pressure fluctuations of fuel supplied to the injector that is attached to the fuel outlet. Thus, pressure fluctuations can be reduced without an increase in the outer dimensions of the fuel rail assembly, since the membrane is positioned within the fuel rail or outlet.

The membrane may be positioned in and extend across the cross-sectional area of the fuel rail or the outlet. In some embodiments, the outlet comprises an outlet port on the fuel rail which is coupled in a fluid tight manner to an outlet pipe. An injector cup for receiving the injector may be coupled in a fluid tight manner to the outlet port or to the outlet pipe, if provided. The membrane may be positioned in and extend across the cross-sectional area of the outlet pipe or the outlet port.

In some embodiments, the fuel rail assembly includes two or more membranes. Two or more membranes may be positioned in the fuel rail or in the outlet pipe. One or more membranes may be positioned in the fuel rail and one or more membranes may be positioned the in the outlet pipe.

If two or more membranes are provided, they may have the same or different designs.

The number, shape, size, position, distribution of the orifices in the membrane may vary. The length of the orifice and, therefore, the thickness of the membrane may also vary.

In another embodiment, the membrane has a predetermined dimension in the direction of fuel flow to provide one or more elongate orifices passing through the membrane.

In a further embodiment, the cross-sectional area of the elongate orifice or orifices varies along its length, such as being frusto-conical along their length.

The profile of the or each orifice may have smoothly changing radii at its inlet end and/or outlet end.

In other embodiments, the cross-section of the orifice or orifices may vary in shape and may be circular, square or nonuniform.

In some embodiments, when a plurality of membranes are spaced along the fuel passage from the inlet to one or more of the fuel outlets, the size and number of the orifices in each membrane are determined by the precise characteristics required to control the pressure fluctuations and the fuel flow and pressure through each membrane.

The disclosure also relates to a method of manufacturing a fuel rail for a fuel injection assembly according to one of the embodiments described herein. In one method, the or each membrane is formed as a separate disc which is secured in the fuel rail or fuel outlet, for example by brazing or welding.

In a further embodiment of this method, the fuel rail and/or fuel outlets are shaped to provide a fixed position or positions in order to determine more precisely the position of the or each membrane. For example a seat may be formed in the inner surface of the fuel rail and/or fuel outlet, on which the membrane may be positioned.

In a further method, the assembly is made by an additive manufacturing technique. Additive manufacturing techniques may be used to build up the fuel rail including the membrane or membranes layer by layer. For example, the elongate fuel rail including the membrane with its orifice(s) may be built up layer by layer, for example using 3D (Three-dimensional) printing or Powder Bed Fusion or Directed Energy Deposition. The fuel rail may be built up layer by layer by movement of the metal jet print head, laser or electron beam controlled according to a three dimensional model of the fuel rail.

In some embodiments, the fuel rail assembly including the membrane(s), elongate fuel rail, outlet, including the outlet port and outlet pipe, and injector cup may be built up layer by layer using 3D (Three-dimensional) printing or Powder Bed Fusion or Directed Energy Deposition.

The use of additive manufacturing allows the production of forms, in the present case the fuel rail or fuel rail assembly, which are difficult or expensive to form using traditional technologies. Due to the greater freedom in the distribution of the material, the amount of material used to fabricate the fuel rail may be reduced. This can be used to reduce the weight of the fuel rail. Additionally, due to the greater freedom in the distribution of the material, a better stress distribution can be provided so that material can be omitted in regions that are not subject to higher stresses in use. Material can also be added, for example the thickness can be increased, in regions that are subjected to higher stresses in use.

In this technique, the internal profile of the fuel rail and/or the fuel outlet or outlets is varied to guide the fuel flow through the membrane and to smooth out pressure fluctuations.

For both manufacturing methods, the membrane may have a smaller cross-sectional area than the fuel passage in the adjacent portion of the fuel rail or fuel outlet.

Embodiments of the present disclosure will now be described by way of example with reference to the accompanying drawings in, which:-
- Figure 1A: shows a side view of a fuel rail assembly,
- Figure 1B: shows a cross-section along the line A-A of Figure 1A and a cross-section along the line B-B,
- Figure 2: shows an isometric view of the fuel rail,
- Figure 3: shows an embodiment of a membrane,
- Figure 4A: shows a plan view of a fuel rail,
- Figure 4B: shows a cross-section along the line A-A of Figure 4A and a cross-section along the line B-B,
- Figure 5: shows a cross-sectional detail of a membrane formed integrally with the fuel rail by additive manufacturing, and
- Figure 6: shows a view of a fuel rail formed by additive manufacturing.

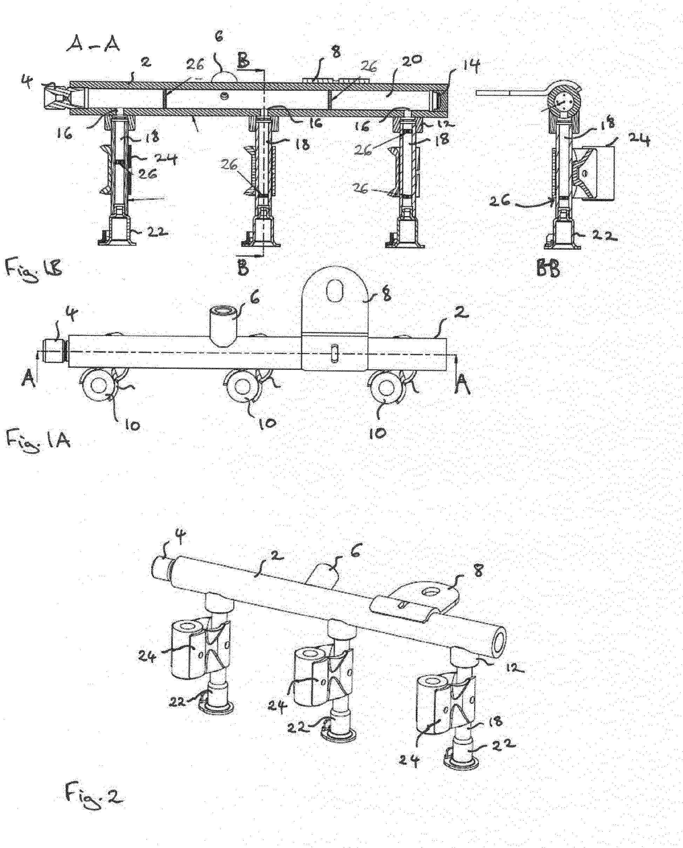

Referring now to Figures 1A, 1B and 2, Figure 1A shows a plan view of a fuel rail 2 which comprises an elongate tubular member having a wall 3 defining a volume for a fuel reservoir and having a fuel inlet 4 and a sensor port 6. A mounting bracket 8 by which the fuel rail 2 is secured to the engine is secured to the exterior of the fuel rail 2, for example by brazing or welding. Also illustrated, are three fixing brackets 24 each arranged for securing an associated injector cup 22 to a mount 10, and shown in greater detail in Figure 1B.

Referring now to the cross-section shown in Figure 1B, the fuel inlet 4 is positioned at one end and is adapted to be connected to a high-pressure pump (not shown) whilst the other end of the fuel rail 2 is closed by a plug 14. The interior volume of the fuel rail comprises a reservoir 20 for fuel. In this embodiment, the fuel rail assembly 2 has three outlets 16 spaced along the fuel rail 2. A fuel outlet port 12 and a fuel delivery or drop pipe 18 is connected to each outlet 16. A fuel injector cup 22 adapted to receive a fuel injector (not shown) is connected at the downstream end of the fuel delivery pipe 18.

The present example shows, by way of example only, a fuel rail assembly for a three cylinder engine having three injector cups 22 each of which is associated with a corresponding cylinder of the internal combustion engine for direct injection into the cylinder. Each fuel delivery pipe 18 has fastened thereto a fixing bracket screw mounting 24 by which the injector cups 22 and delivery pipes 18 are fastened to the engine so that the injector cups 22 are held accurately in position to enable the associated fuel injector to be secured in position to accurately inject fuel into the engine cylinder.

In this way, a fuel flow passage is formed between the fuel inlet 4, the fuel reservoir 20 in the fuel rail 2, the fuel outlets 16, the delivery pipe 18 and the injector cup 22.

For maximum performance from the engine both in terms of power output and low emissions, it is desirable for the fuel pressure and flow through each of the outlets 16, outlet pipes 18 and fuel injectors 22 is as similar as possible. However, due principally to pressure fluctuations in the fuel reaching the outlets 16, and the fuel flow itself, caused by the output of the pressure pump and normal service operating parameters, pressure fluctuations do occur. Whilst to reduce the pressure fluctuations, the volume in the reservoir 20 in the fuel rail 2 may be made larger, this has disadvantages in that the fuel rail 2 requires a larger space in the cramped conditions which exist in the engine bay of modern vehicles. Also, the fuel rail is heavier and adds to material cost in its manufacture and so is less cost effective.

The present disclosure reduces the pressure fluctuations in the fuel being delivered to the injector cups 22 by the use of one or more membranes 26 distributed in the fuel flow passage. Figure 1A and the section B-B in Figure 1B illustrate the position of two membranes 26 that are located spaced apart in the fuel rail reservoir 20 to form a barrier in which one or more orifices 28 are formed. The membranes 26 act to regulate the flow of fluid and to damp out pressure fluctuations in the fuel as it passes through each of the membranes 26.

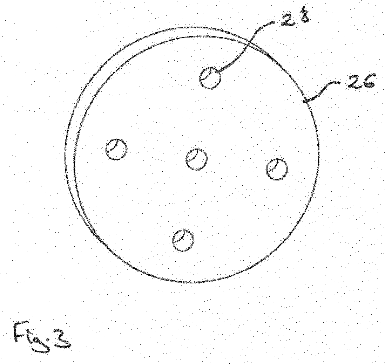

Referring now to Figure 3, there is shown an example of a membrane 26 which comprises a disc having therein five orifices 28 distributed about the surface of the membrane 26. The number, position and size of the orifices may differ for each location of the membrane 26 to ensure that the pressure and flow of the fuel which reaches each of the injector cups is as equal and constant as possible.

The membrane(s) 26 may be located at the positions in the fuel flow passage in which they have the most effect. One or more membranes 26 may be positioned in each of both of the fuel rail 2 and the outlet pipe 18. One, some or all of the outlet pipes may include a membrane 26. In some embodiments, only the outlet pipe 18 furthest from the fuel inlet 4 may include a membrane 26 and the other outlet pipes may include no membrane. The number and position of the membrane in each of the outlet pipes 18 may be the same or different.

It is also possible that one or more membranes 26 may be positioned in the fuel delivery pipes 18 and as shown by way of example in the fuel delivery pipe 18 adjacent the inlet, the membrane is placed midway in the delivery pipe 18, in the middle outlet 16 a membrane 26 is incorporated adjacent the injector cup 22 and for the fuel outlet 16 furthest from the inlet 4, a membrane 26 is located in the delivery pipe 18 adjacent the fuel outlet 16.

The positioning of the membranes 26 can be determined by forming locating shapes in the fuel rail 2 which determine the position of each of the membranes 26 which can then be positioned accurately before being secured in position by brazing or welding or similar techniques.

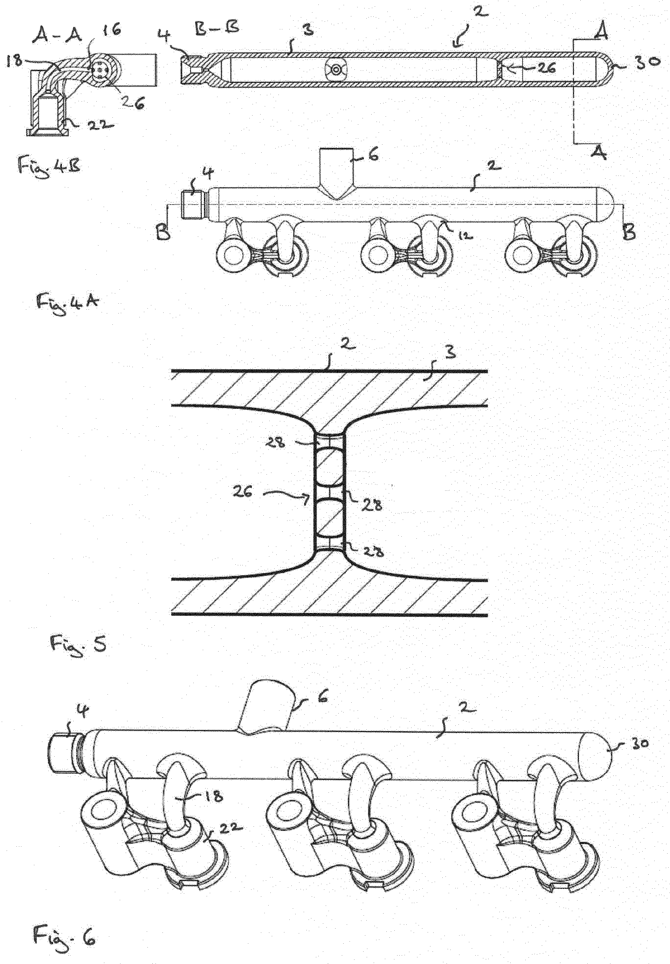

Referring now to Figures 4A, 4B, 5 and 6, there is shown a fuel rail 2 formed by an additive manufacturing technique. As can be seen in figure 4A and 4B, the fuel inlet 4 is formed integrally with the main wall 3 of the fuel rail and in place of the plug 14 shown in Figure 1B, the end of the fuel rail is closed by being formed integrally with the main wall 3 of the fuel rail 2.

In the embodiment illustrated in figures 4 to 6, a membrane 26 is positioned in the fuel rail 2 at a location between the second and third outlet.

An exemplary membrane 26 is shown in greater detail in Figure 5 that is formed integrally with the wall 3 of the fuel rail 2. In other embodiments, the membrane 26 may be formed integrally with the wall of the outlet pipe 18 or outlet port 12. In this embodiment, five orifices 28 are formed in the membrane 26, of which three can be seen in the cross-sectional view of figure 5, and formed integrally with the wall 3. The membrane 26 has a predetermined dimension in the direction of flow through the membrane to enable the orifices 28 to have a predetermined length.

The cross-sectional area of the orifices 28 may be varied along its length as illustrated in figure 5. The orifice(s) 28 may be frusto-conical along at least part of the length. They may also have their inlet and outlets curved to smooth the flow of fuel by increasing the radii at the entrance and exit of the orifices 28. The diameter of the membrane 26, that is its dimension in the transverse direction to the flow through the membrane is smaller than the neighbouring region of the fuel rail 3. The interior surface dimension of the fuel rail wall 3 at the membrane 26 is curved both upstream and downstream of the membrane 26 to provide a smooth entry and exit to the orifices 28 in the membrane 26 and avoid creating additional turbulence in the fuel flow.

To summarize, one or more orifices are formed in the fuel rail in internal zones where such features are not possible or too much expensive using traditional technologies. The one or more orifices are provided by means of one or more additional membranes that are positioned in the main gallery provided by the elongate fuel rail, or in other components such as connection pipes that some in contact with the fuel. The benefit of the orifice (or of the orifices if the layout has more than one) is the reduction of pressure peaks, leading to a better functionality of the injector and a lower fuel rail mechanical stress due to pressure pulsations.

One or more of the following design features may be used to reduce pressure peaks, leading to a better functionality of the injector and a lower fuel rail mechanical stress due to pressure pulsations:
- one or more internal membranes in the fuel rail, each providing one or more orifices;
- the position of the membranes in the fuel rail can be in different zones, such as in the main gallery or in any connecting pipe: for example close to the injector cup, close to the main gallery or in any zone coming into contact with the fuel, depending on the geometry and on the application requirements;
- one or more than one orifice in each membrane may be used, with any layout possible depending on the application requirements; also the diameters of the holes can vary,
- there can be a different orifice layout for each membrane, depending on the application requirements and on the volume's distribution, and a different number of orifices for different main gallery zones and for different cylinders positions as well; this also because the distance from the inlet fitting is different for each cylinder and this implies a possibility of different volume division;
- the design, the thickness and the position of the membranes can be also different depending on the application, as the number of occurrences in the design, and on the mechanical resistance needed;
- several technologies can be used for the creation of the membranes, in the example they can be machined or stamped/punched as standalone component and then brazed, welded or press-fitted (or any other attachment method) in the fuel rail. Additive manufacturing has an advantage in that the shape can be achieved by manufacturing a single part with integrated membranes;
- a local deformation or change in shape of the main gallery or tube can be used to fix the position of the membrane;
- the shape of the orifices and the internal volume can vary depending on the application; the section of the hole can be circular or any other, and also the shape along the membrane thickness can be any like constant or variable, creating in a frusto-conical orifice, for example;
- the overall dimensions and the weight of the fuel rail can be reduced decreasing the fuel rail manufacturing cost. A pressure peak reduction allows the Main Gallery dimensions and weight to be reduced.
- In case of additive manufacturing, the shape of the membrane can present internal and external radii and can be with variable thickness or with any shape permitted by this technology.

### Reference List

- 2: Fuel rail
- 3: Fuel rail wall
- 4: Fuel inlet
- 6: Sensor port
- 8: Mounting bracket
- 10: Mount
- 12: Outlet port
- 14: Plug
- 16: Outlet
- 18: Delivery pipe
- 20: Reservoir
- 22: Injector cup
- 24: Fixing bracket screw mounting
- 26: Membrane
- 28: Orifice
- 30: Fuel rail wall end

## Claims

1. A fuel injection assembly for a multi-cylinder internal combustion engine, the assembly comprising an elongate fuel rail (2) having an interior volume defining a fuel reservoir (20), and having a fuel inlet port (4) and a plurality of fuel outlets (16) spaced along the fuel rail (2),
wherein at least one of the fuel rail (2) and/or the fuel outlets (16) has in the fuel flow passage therethrough a membrane (26) comprising a barrier to fuel flow and at least one orifice (28) therein.

2. A fuel injection assembly according to claim 1, wherein the membrane (26) has a plurality of orifices (28).

3. A fuel injection assembly according to claim 1 or claim 2, wherein the fuel outlet (16) comprises an outlet port (12) and an outlet pipe (18) and the membrane (26) is positioned in the outlet pipe (18).

4. A fuel injection assembly according to any one of claims 1 to 3, wherein the membrane (26) has a predetermined dimension in the direction of fuel flow to provide one or more elongate orifices (28) passing through the membrane (26).

5. A fuel injection assembly according to claim 4, wherein the cross-sectional area of the elongate orifice or orifices (28) varies along its length.

6. A fuel injection assembly according to claim 5, wherein the orifice or orifices (28) are frusto-conical along at least part of their length.

7. A fuel injection assembly according to any one of the preceding claims, wherein the profile of the or each orifice (28) has smoothly changing radii at its inlet end and/or outlet end.

8. A fuel injection assembly according to any one of the preceding claims, wherein the cross-section of the orifice or orifices (28) is circular, square or nonuniform.

9. A fuel injection assembly according to any one of the preceding claims, wherein, when a plurality of membranes (26) are spaced along the fuel passage from the inlet to one or more of the fuel outlets (16).

10. A method of manufacturing a fuel rail for a fuel injection assembly according to any one of claims 1 to 9, wherein the or each membrane (26) is formed as a disc which is secured in the fuel rail (2) or fuel outlet (16) by brazing or welding.

11. A method of manufacturing a fuel rail according to claim 10, wherein the fuel rail (2) and/or fuel outlet (16) is shaped to provide a fixed location position or positions to determine the position of the or each membrane (26).

12. A method of manufacturing a fuel injection assembly according to any one of claims 1 to 9, made by an additive manufacturing technique.

13. A method of manufacturing according to claim 12, wherein the internal profile of the of the fuel rail (2) and/or the fuel outlet or outlets (16) is varied to guide the fuel flow through the membrane (26), the membrane (26) having a smaller cross-sectional area than the fuel passage in the adjacent the fuel rail (2) or fuel outlet (16).

14. A method according to claim 13, wherein the fuel rail assembly is built up layer by layer by 3D printing or Powder Bed Fusion or Directed Energy Deposition.

15. A method according to claim 13 or claim 14, wherein the fuel rail assembly is built up layer by layer by movement of the metal jet print head, laser or electron beam controlled according to a three dimensional model of the fuel rail assembly.
